(19) Europäisches Patentamt
European Patent Office
Office européen des brevets

(11) **EP 1 887 504 A2**

# (12) EUROPEAN PATENT APPLICATION

(43) Date of publication:
**13.02.2008 Bulletin 2008/07**

(21) Application number: **07253119.7**

(22) Date of filing: **09.08.2007**

(51) Int Cl.:
***G06Q 10/00*** *(2006.01)*

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU**<br><br>(30) Priority: **11.08.2006 US 503225**<br><br>(71) Applicant: **United Technologies Corporation**<br>**Hartford, CT 06101 (US)** | (72) Inventors:<br> • **Seaman, Caroline A.**<br>  **Northhampton, MA 01060 (US)**<br> • **Down-Lyons, Caroline J.**<br>  **Glastonbury, CT 06033 (US)**<br><br>(74) Representative: **Leckey, David Herbert**<br>**Frank B. Dehn & Co.**<br>**St Bride's House**<br>**10 Salisbury Square**<br>**London EC4Y 8JD (GB)** |

## (54) Method, program, and system for monitoring supplier capacities

(57) A capacity monitoring for a plurality of suppliers is performed by receiving performance data of at least one of the suppliers (14), receiving forecast data of a manufacturer (16), and generating a capacity risk rating (18) based on the received performance data and the received forecast data.

FIG. 1

EP 1 887 504 A2

**Description**

The present invention relates to methods, programs, and systems for monitoring supplier capacities. In particular, the present invention relates to methods, programs, and systems that allow a manufacturer to monitor supplier capacity risks for identifying when a supplier may not be able to meet future delivery requirements of the manufacturer.

Industrial manufacturers typically rely on external suppliers to deliver a variety of parts, which the manufacturers then use to assemble products. Once the products are assembled from the delivered parts, the manufacturers then sell the assembled products to customers. For example, engine manufacturers rely on suppliers to deliver numerous different engine components and spare parts. The engine manufacturer then assembles engines with the engine components, and sells the assembled engines to customers.

Because manufacturers require the parts to be delivered before assembling the products, the manufacturers rely on the suppliers to deliver their components on time. Whether a supplier is capable of delivering its parts on time is based on the supplier's capacity (e.g., time, workers, and equipment), which typically lies outside of the manufacturer's direct control. Suppliers, however, typically size their shops to meet an average level of deliveries, with small amounts of extra capacities to handle demand surges. Extra capacities are undesirable from a supplier's standpoint because it is expensive to leave machines and manpower unused.

Accordingly, it is important for manufacturers to be able to monitor supplier capacities to ensure that the manufacturers receive the delivered parts on time, thereby allowing the manufacturers to assemble and produce products on time. Furthermore, because many manufacturers rely on hundreds of suppliers for a single manufacturing project, it also important that the capacity monitoring is performed efficiently.

According to a first aspect of the present invention there is provided a method for monitoring capacities as claimed in claim 1.

According to a second aspect of the present invention there is provided a computer program for monitoring capacities as claimed in claim 10.

According to a third aspect of the present invention there is provided a computer system as claimed in claim 15.

For each supplier, a capacity risk rating is generated based on data relating to the supplier's past demonstrated capacities and on data relating to forecasted future demands for the supplier.

Preferred embodiments of the present invention will now be described, by way of example only, and with reference to the accompanying drawings, in which:

> FIG. 1 is a flow diagram of a method for monitoring a capacity of a supplier.
> FIG. 2 is a graphical illustration of a capacity risk chart, which is suitable for use in generating a capacity risk rating for the supplier.
> FIG. 3 is a flow diagram of a method for monitoring capacities of multiple suppliers.
> FIG. 4 is a block diagram of a computer-based system for monitoring capacities of multiple suppliers.
> FIGS. 5A-5I are screen shots of display modules of a software program that is used with the computer-based system for monitoring capacities of multiple suppliers.

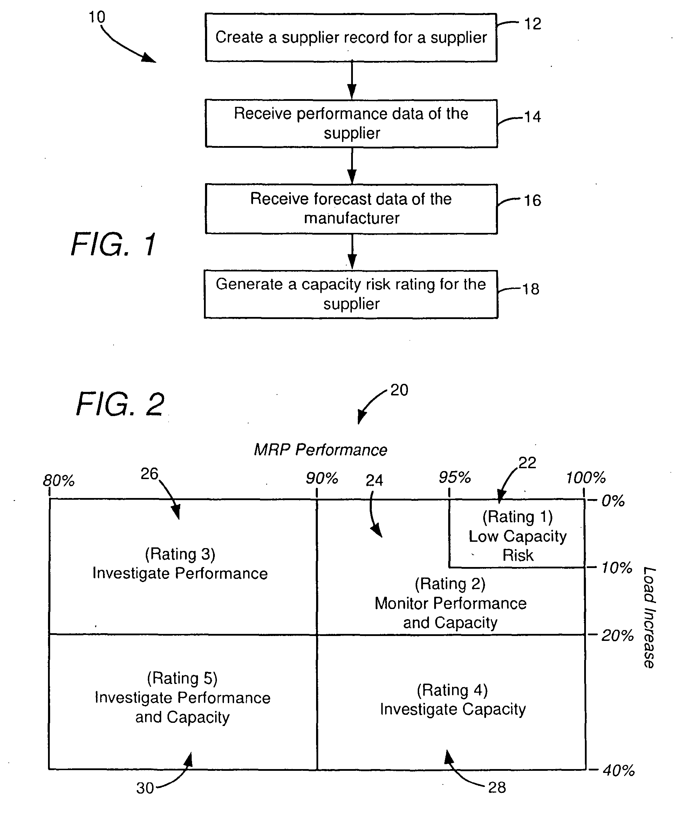

FIG. 1 is a flow diagram of method 10, which is a computer-implemented method used by personnel of a manufacturer (e.g., commodity managers, buyers, supply managers, and others in the procurement community) to monitor a supplier's capacity to deliver parts on time. This allows the manufacturer to determine when to mobilize resources to prevent capacity problems. Method 10 includes steps 12-18, and initially involves creating a supplier record for the supplier with a computer (step 12). The supplier record is a digital record that includes a variety of information relating to the supplier, such as biographical information, contact information, information relating to the part delivered, credit account information, and delivery performances.

Once the supplier record is created, the computer then updates the supplier record in an automated manner over a predetermined interval (e.g., monthly), or manually under user control. The updating initially involves receiving data relating to the supplier's past delivered parts and associated delivery performance metrics to the manufacturer (referred to herein as "performance data") (step 14). Performance data of the supplier is beneficial for identifying capacities that the supplier has demonstrated in the past. Examples of suitable types of performance data include data relating the supplier's past quantity of parts delivered, material-requirements-planning (MRP) delivery performances, workstops, andons, overdue deliveries, temporary vendor assists (TVA), permanent vendor assists (PVA), and combinations thereof.

In one embodiment, the performance data includes production line data of the supplier. The production data is information regarding the layouts of the supplier's shops and resources (e.g., machines, workers, and outside suppliers) for the parts delivered to the manufacturer. The production line data is obtained by initially defining production lines used to produce the parts. Defining the production lines is desirably performed by the supplier because of the supplier's knowledge and expertise over the shops and resources available. When defining the production lines, the supplier also desirably identifies the type of each production line (e.g., primary production lines, secondary production lines, shared resource areas, and outside suppliers), and which parts are associated with each production line (e.g., part names, part numbers, part descriptions, part family numbers, and part family names).

Once the production lines are defined, the supplier then provides details regarding each production line. Examples of suitable types of details regarding each production line include supplier capacity commitments, production line lead times, average total part throughput for all customers per time period (e.g., average parts/month), number of customers receiving parts from the given production line, percentage of total throughput devoted to the manufacturer, number of work shifts used to produce the average throughput, overtime used to produce the average throughput, maximum production line capacity per time period (e.g., maximum parts/month), shared resources information, vendor assist information, and combinations thereof.

In addition to receiving performance data, the updating also involves receiving data relating to the predicted number of parts that the manufacturer expects to require from the supplier in the future (referred to herein as "forecast data") (step 16). Examples of suitable types of forecast data include pending orders, firm orders, forecasted orders, lead time information, and combinations thereof. Pending orders are orders of parts that have been placed with the supplier, but the parts have not been delivered. Firm orders are orders that will be placed in the future based on a known need (e.g., a number of spare parts that will be required). Forecasted orders are orders that will be placed in the future based on a predicted number of parts that the manufacturer is expected to need in the future.

The performance data and the forecast data may be received from a variety of sources, such as a database that receives transactional information between the manufacturer and the supplier. While steps 14 and 16 are described in the order shown in FIG. 1, the computer may receive the performance data and the forecast data in any order, or simultaneously.

After the computer updates the supplier record with the performance data and the forecast data, the computer then generates a "capacity risk rating" for the supplier (step 18). The capacity risk rating is a rating based on the received performance data and the received forecast data, thereby allowing the manufacturer to identify whether the supplier is at risk for not having the capacity to meet the manufacturer's future delivery requirements. As discussed above, this allows the manufacturer to take action to prevent any potential capacity problems of the supplier.

FIG. 2 is a graphical illustration of capacity risk chart 20, which illustrates a suitable technique for generating a capacity risk rating for the supplier, pursuant to step 18 of method 10 (shown above in FIG. 1). As shown in FIG. 2, capacity risk chart 20 includes rating sections 22-30, a horizontal axis entitled "MRP performance", and a vertical axis entitled "load increase". In this embodiment, the capacity risk rating for the supplier is generated as a two-variable function of (1) a past MRP performance of the supplier and (2) a probable load increase of the manufacturer.

The past MRP performance of the supplier is based on the received performance data of the supplier, and identifies how well the supplier met the manufacturer's delivery requirements in the past. The past MRP performance is quantified as a percentage of the number of parts with overdue requirements versus the number of parts with active delivery schedules in the manufacturer's MRP forecast system:

$$MRPPerformance = \frac{100(Parts_{OD})}{(Parts_A)} \qquad \text{Equation 1}$$

where "$Parts_{OD}$" is the number of parts overdue for delivery to the manufacturer, and "$Parts_A$" is the number of parts with active delivery schedules in the manufacturer's MRP system. For example, a past MRP performance of 80% means that the supplier was able to deliver 80% of the part number orders required by the manufacturer on time. The past MRP performance is desirably averaged over a period of time to increase the accuracy of the results. Suitable periods of time include at least about six months. Standard deviations may also be used to identify large fluctuations in the average past MRP performance.

The probable load increase for the manufacturer is the predicted increase in the number of parts that the manufacturer expects to require over time, and is based on a combination of the received performance data of the supplier and the received forecast data of the manufacturer. The probable load increase is quantified as a percentage increase over a time period, pursuant to the following equation:

$$LoadIncrease = \frac{100(Parts_{FC} + Parts_{FM} + Parts_{OD} - Parts_D)}{Parts_D} \qquad \text{Equation 2}$$

where "$Parts_{FC}$" is the number of forecast order parts that are predicted to be required over the time period, "$Parts_{FM}$" is the number of firm order parts that are known to be required over the time period, "$Parts_{OD}$" is the number of overdue parts that the supplier has not yet delivered (same $Parts_{OD}$ used in Equation 1), and "$Parts_D$" is the number of parts actually delivered by the supplier. For example, a 5% probable load increase over a given time period means that the manufacturer expects the number of required parts delivered by the supplier to increase by 5% over the time period. Examples of suitable time periods for determining the probable load increase include at least about 12 months of future demand compared to at least about 12 months of past deliveries. Standard deviations may also be used to identify large fluctuations in the probable load increase.

Capacity risk chart 20 is used to determine the capacity risk rating for the supplier as a two-variable function of Equations 1 and 2. Accordingly, poor past MRP performances by the supplier and high probable load increases of the manufacturer correlate to high capacity risk ratings, and good past MRP performances by the supplier and low probable load increases of the manufacturer correlate to low capacity risk ratings. For example, if the supplier has a past MRP performance ranging from about 95% to 100%, and the manufacturer has a probable load increase ranging from 0% to about 10% (i.e., rating section 22), the supplier's capacity risk rating is low (i.e., Rating 1). The low capacity risk rating is due to the supplier's good past delivery performances, and because the manufacturer does not expect to increase the required numbers of parts over the time period. As a result, the manufacturer is not notified to actively monitor or investigate the performance or capacity of the supplier because the supplier will most likely be able to meet the manufacturer's future delivery requirements.

Alternatively, if the supplier has a past MRP performance ranging from about 90% to about 95% and the manufacturer has a probable load increase ranging from 0% to about 20%, or if the supplier has a past MRP performance ranging from about 90% to 100% and the manufacturer has a probable load increase ranging from about 10% to about 20% (i.e., rating section 24), the supplier's capacity risk rating is moderately low (i.e., Rating 2). This is due to the supplier's relatively good past delivery performances, and because the manufacturer's predicted increase in the required numbers of parts over the time period is moderate. The moderately low rating notifies the manufacturer to monitor the performance and capacity of the supplier to prevent any performance or capacity problems of the supplier. However, the moderately low rating does not notify the manufacturer to further investigate the performance or capacity of the supplier.

If the supplier has a past MRP performance less than about 90%, and the manufacturer has a probable load increase ranging from 0% to about 20% (i.e., rating section 26), the supplier's capacity risk rating is moderate (i.e., Rating 3). This is due to the supplier's poor past delivery performances. As a result, the manufacturer is notified to further investigate the performance capabilities of the supplier to determine why the supplier has not met the past delivery requirements. For example, upon further investigation, the manufacturer may determine that the supplier's past performances were poor because of unforeseen, isolated incidents (e.g., equipment failures, worker strikes, and acts of nature). Based on the investigation, the manufacturer may decide whether to mobilize resources to resolve the performance problem.

If the supplier has a past MRP performance ranging from about 90% to 100%, and the manufacturer has a probable load increase greater than about 20% (i.e., rating section 28), the supplier's capacity risk rating is high (i.e., Rating 4). This is based on the assumption that suppliers typically do not have greater than 20% idle capacity. As discussed above, suppliers typically do not have larges amounts of extra capacity due to the cost of leaving machines and manpower unused. Therefore, the manufacturer is notified to further investigate the supplier's capacity to determine whether the supplier is capable of delivering the predicted increase in the number of required parts.

Finally, if the supplier has a past MRP performance less than about 90%, and the manufacturer has a probable load increase greater than about 20% (i.e., rating section 30), the supplier's capacity risk rating is very high (i.e., Rating 5). This is due to a combination of poor past delivery performances by the supplier and the high predicted increase in the number of parts required by the manufacturer. If the supplier had trouble meeting past delivery requirements over a given time period, it is unlikely that the supplier will meet the increased demand in the future. As a result, the manufacturer is notified to further investigate the past delivery performances and the capacity of the supplier to determine whether the supplier is capable of delivering the predicted increase in the number of required parts.

The values shown in capacity risk chart 20 for the past MRP performance and the probable load increase are examples of suitable ranges for generating a capacity risk rating for a supplier. However, because method 10 is suitable for use with many different manufacturing applications, the actual values used may vary depending on commercial delivery standards of the given applications.

It is noted that the capacity risk rating does not necessarily indicate whether a supplier will have a capacity problem. The capacity risk rating is beneficial for quickly and efficiently identifying suppliers that are at risk for capacity problems, thereby allowing the manufacturer to conduct a more thorough investigation to determine whether a capacity problem actually exists. For example, during the more thorough investigations (e.g., for Ratings 3-5), the manufacturer may take other factors into account, such as how much of the supplier's total capacity is allocated to the manufacturer (e.g., if the supplier delivers the same parts to multiple manufacturers), and the sophistication and organization of the supplier. Another factor is the supplier's relationship with the manufacturer (e.g., if the supplier is faced with a capacity constraint, the manufacturer will receive first priority on the existing capacity).

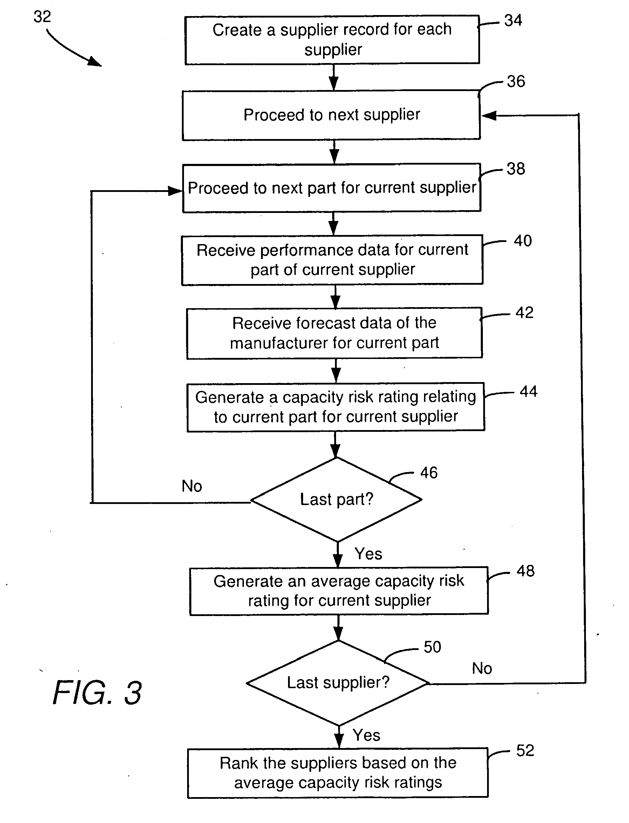

FIG. 3 is a flow diagram of method 32, which is similar to method 10 (shown above in FIG. 1), but involves monitoring the capacities of multiple suppliers, where each supplier delivers multiple parts to the manufacturer. As shown in FIG. 3, method 32 includes steps 34-52, and initially involves creating a supplier record for each of the multiple suppliers with a computer (step 34). As discussed above, each supplier record is a digital record that includes a variety of information relating to the given supplier, such as biographical information, contact information, information relating to the parts delivered, credit account information, and delivery performances.

Once the supplier records are created, the computer then updates the supplier records in an automated manner over a predetermined interval (e.g., monthly), or manually under user control. The updating initially involves proceeding to the supplier record of the first supplier (step 36). Because there are no previous supplier records at this point, the "next" supplier at this point is a "first supplier", corresponding to a first supplier record stored in the computer. The computer then proceeds to the first part that the first supplier delivers to the manufacturer (step 38). Because there are no previous parts of the first supplier, the "next" part at this point is a "first part" in the first supplier record.

The computer then receives data relating to the first supplier's past performances of deriving the first part to the manufacturer (i.e., "performance data") (step 40), and receives data relating to the predicted number of first parts that the manufacturer expects to require from the first supplier in the future (i.e., "forecast data") (step 42). Examples of suitable types of data for the performance data of the first supplier and the forecast data of the manufacturer are the same as those discussed above in steps 14 and 16 of method 10 (shown above in FIG. 1).

The performance data and the forecast data received in steps 40 and 42 may be received from a variety of sources, such as a database that receives transactional information between the manufacturer and the first supplier. While steps 40 and 42 are described in the order shown in FIG. 1, the computer may receive the performance data and the forecast data in any order, or simultaneously.

After the computer updates the supplier record of the first supplier with the performance data and the forecast data for the first part, the computer then generates a "capacity risk rating" with respect to the first part of the first supplier (step 44). The capacity risk rating is a rating based on the received performance data and the received forecast data, thereby allowing the manufacturer to identify whether the first supplier is at risk for not having the capacity to meet the manufacturer's future delivery requirements of the first part.

In one embodiment, the capacity risk ratings generated pursuant to step 44 of method 32 are generated using the past MRP performance of the given supplier and the probable load increase of the manufacturer, as described above in the discussion for capacity risk chart 20 (shown above in FIG. 2). Thus, in this embodiment, the capacity risk rating relating to the first part delivered by the first supplier is generated using the past MRP performance of the first supplier and the probable load increase of the manufacturer for the first part.

After the capacity risk rating is generated with respect to the first part, the computer then determines whether the first part is the last part that the first supplier delivers to the manufacturer (step 46). In this example, let us assume that the first supplier delivers multiple parts to the manufacturer. Thus, the computer then proceeds to the next part delivered by the first supplier (i.e., the second part) (step 38). The computer then receives performance data and forecast data relating to the second part (steps 40 and 42), and generates a capacity risk rating with respect to the second part of the first supplier (step 44). Steps 38-46 are then repeated for each part that the first supplier delivers to the manufacturer. This generates a capacity risk rating with respect to each part that the first supplier delivers to the manufacturer.

When the computer identifies that the current part is the last part delivered by the first supplier (step 46), the computer then generates an average capacity risk rating for the first supplier (step 48). The average capacity risk rating for the first supplier is the average of the capacity risk ratings for all of the parts that the first supplier delivers to the manufacturer. Standard deviations may also be used to identify large fluctuations in the average capacity risk rating for the first supplier. The capacity risk ratings for the individual parts and the average capacity risk rating allow the manufacturer to identify whether the first supplier has a capacity risk for one or more of the individual parts, and whether the first supplier has a capacity risk on an overall scale as well.

After the average capacity risk rating for the first supplier is generated, the computer determines whether the first supplier record is the last supplier record (step 50). If not, the computer then proceeds to the next supplier, and repeats steps 36-50 for each supplier. This generates capacity risk ratings relating to each part of each supplier, and an average capacity risk rating for each supplier.

When the computer determines that the current supplier is the last supplier (step 50), the computer then ranks the suppliers based on the average capacity risk ratings (step 52). For example, the computer system may rank the suppliers based on the Ratings 1-5 shown in capacity risk chart 20. This allows the manufacturer to readily identify which suppliers have the greatest capacity risks. Thus, the manufacturer can efficiently investigate the performances and capacities of high-risk suppliers without having to expend time to review the performances and capacities of low risk suppliers.

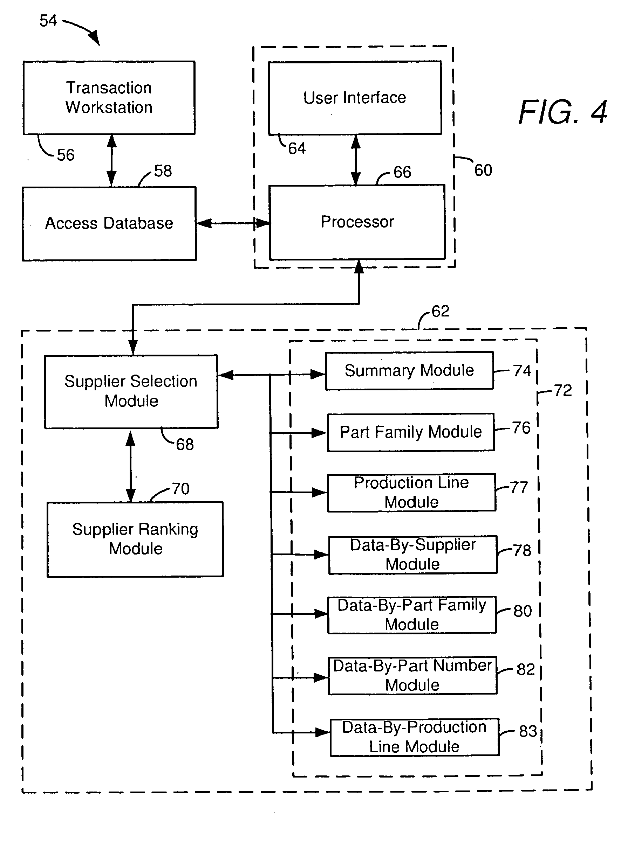

FIG. 4 is a block diagram of system 54, which is a computer-based system suitable for monitoring the capacities of multiple suppliers pursuant to method 32 (shown above in FIG. 3). System 54 includes transaction workstation 56, access database 58, user computer 60, and supplier capacity tool (SCT) program 62. Transaction workstation 56 is a computer (or multiple computers) that the manufacturer uses to enter business transactions with suppliers, and to set up forecast schedules for future required deliveries. For example, the manufacturer may use transaction workstation 56 to enter firm orders with a supplier, identify delivery dates of parts from a supplier, and to identify overdue deliveries. Suitable transactional software for use with transaction workstation 56 include business solution packages commercially available from SAP America, Inc., Newtown Square, PA.

Transaction workstation 56 communicates with access database 58, which is a database that stores the transactional information and forecast schedules. As the manufacturer enters the transactional information and forecast schedules into transaction workstation 56, the data is relayed to access database 58, where it is stored as performance data of the suppliers and forecast data of the manufacturer.

User computer 60 is a computer system used by the manufacturer to monitor the capacities of the suppliers. User computer 60 includes interface 64 and processor 66, where interface 64 may be any type of interface controls that allow a user to operate SCT program 62 on user computer 60, such as keyboards, input pads, viewing screens, and the like. Processor 66 is a computer processor configured to communicate with interface 64 and access database 58, while operating SCT program 62.

SCT program 62 is a software program loaded on user computer 60 for monitoring supplier capacities pursuant to method 32. As shown, SCT program 62 includes supplier selection module 68, supplier ranking module 70, and supplier record 72, where supplier selection module 68 and supplier ranking module 70 are display modules viewable by the user on a viewing screen of interface 64. Supplier record 72 is a digital record of one of the suppliers, and includes summary module 74, part family module 76, production line module 77, data-by-supplier module 78, data-by-part family module 80, data-by-part number module 82, and data-by-production line module 83, each of which are also display modules viewable by the user on a viewing screen of interface 64. Pursuant to step 34 of method 32 (shown above in FIG. 3) a supplier record 72 is created in SCT program 62 for each supplier that delivers parts to the manufacturer.

When the user desires to monitor the capacity of a supplier, the user loads SCT program 62 on user computer 60. While SCT program 62 is loading, SCT program 62 runs a routine that communicates with access database 58 via processor 66 and receives updated performance data of the suppliers and forecast data of the manufacturer, pursuant to steps 40 and 42 of method 32. SCT program 62 then generates updated capacity risk ratings and rankings for the suppliers based on the updated performance data and forecast data, pursuant to steps 44, 48, and 52 of method 32. When SCT program 62 is loaded, supplier selection module 68 appears on the viewing screen, which allows the user to select which supplier record to view (e.g., supplier record 72), or to view supplier ranking module 70. Thus, system 54 provides a convenient means for the manufacturer to monitor the capacities of the suppliers.

While SCT program 54 is shown in FIG. 4 with the listed display modules, SCT program 54 may operate in a variety of different manners to provide the same convenient manner for the manufacturer to monitor the capacities of the suppliers. For example, user computer 60 may include a plurality of SCT programs 62, where each SCT program 62 corresponds to a supplier record 72. In this alternative embodiment, when an SCT program 62 is loaded for a particular supplier record 72, SCT program 62 receives updated performance data and forecast data relating to the corresponding supplier, pursuant to steps 40 and 42 of method 32. SCT program 62 then generates an updated capacity risk rating for the supplier based on the updated performance data and forecast data, pursuant to steps 44 and 48. This reduces the amount of data that is transferred between access database 58 and user computer 60, thereby increasing the efficiency of system 54.

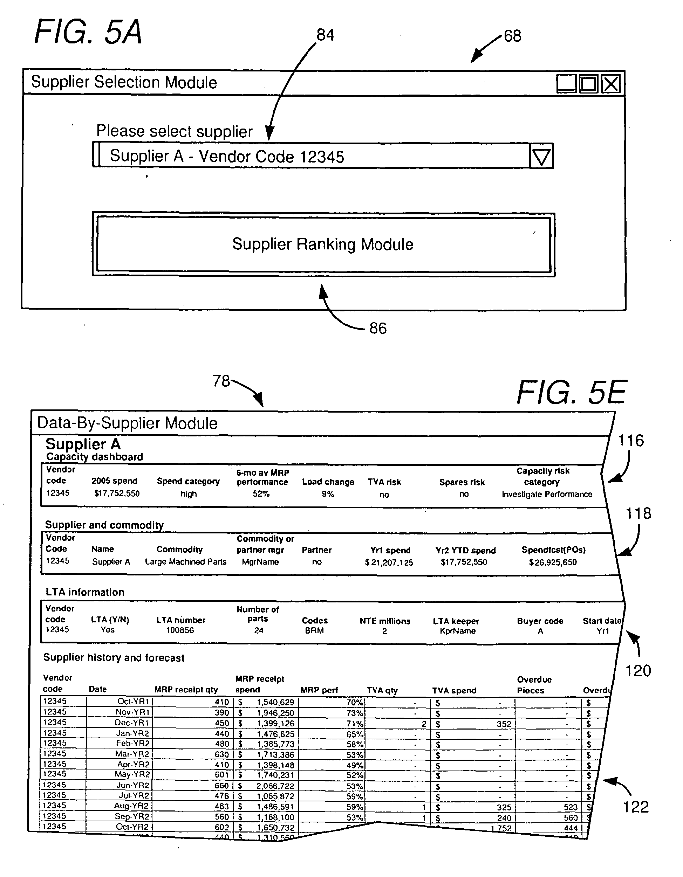

FIGS. 5A-5I are screen shots of the display modules of SCT program 62. FIG. 5A is a screen shot of supplier selection module 68, which is an introductory screen of SCT program 62 that allows the user to select which supplier record to view. Supplier selection module 68 includes selection menu 84 and ranking button 86, where selection menu 84 is a pull-down menu with a list of all of the supplier records created. As such, to monitor the capacity of a desired supplier, the user selects a supplier record with selection menu 84. SCT program 62 then opens the corresponding supplier record 72, and displays summary module 74 (not shown in FIG. 5A) on the viewing screen. Ranking button 86 is a button that displays supplier ranking module 70 (not shown in FIG. 5A) on the viewing screen, as discussed below.

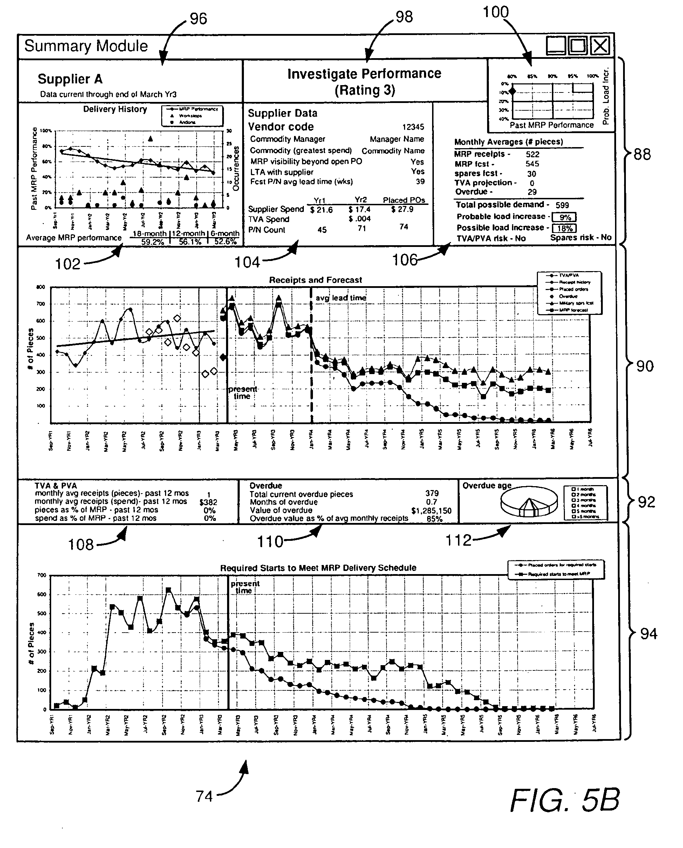

FIG. 5B is a screen shot of summary module 74, which provides a convenient summary of the received performance data of a supplier (shown as "Supplier A") and the received forecast data of the manufacturer. Summary module 74 includes, from top-to-bottom in FIG. 5B, primary data section 88, receipts and forecast graph 90, secondary data section 92, and MRP delivery schedule graph 94, each of which allow the user to readily monitor the supplier's capacity.

Primary data section 88 includes supplier name portion 96, capacity risk rating portion 98, capacity risk chart 100, delivery history portion 102, supplier information portion 104, and load increase portion 106, where supplier name portion 96 identifies which supplier record is being reviewed (i.e., Supplier A). Supplier name portion 88 also states when SCT program 62 was last updated with the received performance data and forecast data.

Capacity risk rating portion 98 shows the average capacity risk rating for the supplier, thereby allowing the user to quickly recognize if further investigation of the supplier's capacity or performance is required. The text within capacity risk rating portion 98 changes with the updated capacity risk rating, and may also be color coordinated to catch the user's eye (e.g., green for a Rating of 1 and red for a Rating of 5).

Capacity risk chart 100 is a graphical chart that displays the supplier's average capacity risk rating as a function of a past MRP performance of the supplier and a probable load increase of the manufacturer in the same manner as capacity risk chart 20 (shown above in FIG. 2). This allows the user to readily view the supplier's capacity and past performances. As shown in capacity risk chart 100, SCT program 62 generated a moderate capacity risk rating (Rating 3) for the supplier. This corresponds to the rating displayed in capacity risk rating portion 98.

Because the supplier has a moderate capacity risk rating, the manufacturer is notified to further investigate the performance capabilities of the supplier to determine why the supplier has not met the past delivery requirements. Delivery history portion 102 graphically shows the past MRP performances of the supplier over time, as calculated by Equation 1, discussed above. When SCT program 62 receives the updated performance data, the past MRP performances are correspondingly updated in delivery history portion 102. This allows the user to analyze the past delivery performances to see trends in the supplier's deliveries.

Delivery history portion 102 also shows the average MRP performance over various times (i.e., last 6 months, last 12 months, and last 18 months). In the current example shown in FIG. 5B, the average capacity risk rating generated for capacity risk rating portion 98 and capacity risk chart 100 is based on a past MRP performance of the supplier that is averaged over the last 6 months (i.e., an average past MRP performance of 52.6%).

Supplier information portion 104 shows biographical information about the supplier, which allows the user to quickly identify and understand the supplier's background. Suitable types of biographical information that may be displayed in supplier information portion 104 include the supplier's vendor code, personnel of the manufacturer who deal with the supplier (e.g., commodity managers), the suppliers commodities (i.e., what parts the supplier delivers), whether the MRP forecast schedule is viewable by the supplier, whether the supplier has any long-term agreements (LTA), the average delivery lead time for the supplier, and past monetary dealings with the supplier.

Load increase portion 106 lists the supplier's past and potential delivery performances, thereby allowing the user to quickly identify the supplier's delivery capabilities. Suitable types of information that may be displayed in load increase portion 106 include past MRP receipts, MRP forecasts, spares forecasts, expected TVAs, number of overdue parts, total possible delivery demands, the probable load increase of the manufacturer, a possible load increase of the manufacturer, TVA/PVA risks, and spares risks. In the example shown in FIG. 5B, the probable load increase of the manufacturer (i.e., 9%) is calculated pursuant to Equation 2, as discussed above, where the time period for the calculation is twelve months in the future.

The "possible load increase" of the manufacturer allows the user to identify what increase in delivery requirements the supplier is capable of handling. The possible load increase is quantified as a percentage of the total possible delivery demands versus the number of parts actually delivered by the supplier:

$$PossibleLoadIncrease = \frac{100(Parts_T - Parts_D)}{Parts_D} \qquad \text{Equation 3}$$

where "$Parts_T$" is the total possible number of parts that the manufacturer may demand (i.e., a sum of the MRP forecasts, spares forecasts, expected TVAs, and number of overdue parts), and "$Parts_D$" is the number of parts actually delivered by the supplier (same $Parts_D$ used in Equation 2).

Receipts and forecast graph 90 is a graph of the deliveries of parts of the supplier and the forecast data of the manufacturer, which provides a visual aid to allow the user to further investigate the capacity and performance of supplier when necessary. The values shown in receipts and forecast graph 90 are average values based on all of the parts delivered by the supplier. The future time horizon displayed is desirably long enough such that the supplier has sufficient time to increase capacity by adding machines, hiring additional workers, and validating production capabilities if a large increase in manufacturer demand is observed in the future.

Secondary data section 92 includes TVA/PVA portion 108, overdue data portion 110, and overdue graph portion 112, each of which provide additional information about the supplier's delivery performances and capacity. TVA/PVA portion 108 lists TVA and PVA information, thereby allowing the user to identify temporary and permanent vendor assists that may affect the supplier's past performances. Overdue data portion 110 and overdue graph portion 112 provide information to the user about how many parts the supplier still has not delivered, and the values of the overdue parts. This information also allows the user to further identify potential capacity and performance issues of the supplier.

MRP starts schedule graph 94 is a graph showing when the supplier is required to begin work on the parts needed for future demand of the manufacturer. The date by which the supplier must begin work on a particular part is calculated by subtracting the supplier's lead time to produce the part from the manufacturer's required delivery date of the part. The data listed in MRP starts schedule graph 94 is based on the received forecast data, and allows the user to identify whether the supplier may have future capacity issues.

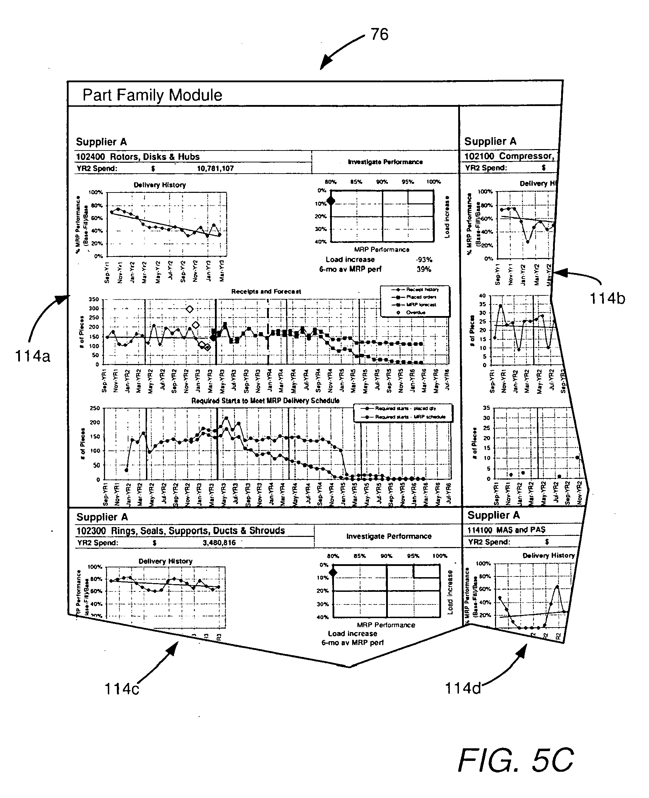

FIG. 5C is a screen shot of part family module 76, which provides summary information similar to the information provided in summary module 74 (shown above in FIG. 5B), but the information is divided into part families. Part families are groups of similar parts that are categorized by the manufacturer. Part family module 76 includes a plurality of part family sections (part family sections 114a-114d are shown in FIG. 5C), each of which provide greater details for the user to review when investigating the performance or capacity of the supplier. For example, the user may review one or more of part family sections 114a-114d to identify whether the supplier is having capacity problems with a particular part family. This information assists the user in determining whether to mobilize resources to prevent capacity problems with the given part family.

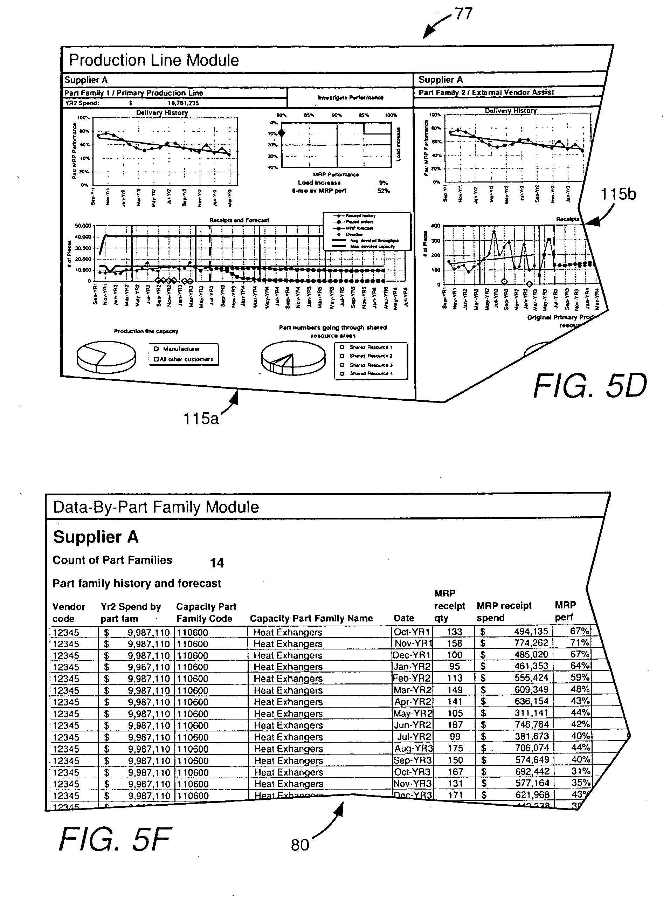

FIG. 5D is a screen shot of production line module 77, which also provides summary information similar to the information provided in summary module 74 (shown above in FIG. 5B), but the information is divided by the production lines of the supplier. As discussed above, the performance data received by the suppliers can include information relating to the supplier production lines. Production line module 77 includes a plurality of production line sections (production line sections 115a and 115b are shown in FIG. 5D), each of which provide greater details for the user to review when investigating the performance or capacity of the supplier. For example, the user may review one or more of the production line sections (e.g., sections 115a and 115b) to identify whether a capacity problem is associated with a particular production line. Based on this information, the manufacturer may work with the supplier to increase the throughput of the production line, or to increase the percent of total throughput that is devoted to the manufacturer.

FIGS. 5E-5H are screen shots of data-by-supplier module 78, data-by-part family module 80, data-by-part number module 82, and data-by-production line module 83, which provide tables of the received performance data, the received forecast data, and the generated capacity risk ratings. Each of data-by-supplier module 78, data-by-part family module 80, data-by-part number module 82, and data-by-production line module 83 organize the data in a different format, thereby allowing the user to analyze the data in different manners while investigating performance or capacity issues of the supplier.

As shown in FIG. 5E, data-by-supplier module 78 includes capacity dashboard section 116, supplier and commodity section 118, LTA information section 120, and transaction data section 122. Capacity dashboard section 116 provides a summary of the supplier's capacity, such as the average past MRP performance, the probable load increase, and the capacity risk rating. Supplier and commodity section 118 provides a summary of the monetary exchanges between the manufacturer and the supplier, and also lists the contact personnel for the manufacturer and the supplier. LTA information section 120 accordingly provides a summary of the LTA information for the supplier.

Transaction data section 122 lists data regarding the transactions between the manufacturer and the supplier, where each transaction includes all of the parts delivered for the given transaction. Thus, transaction data section 122 provides the user with an overall summary of each transaction, which allows the user to identify which transactions had potential performance or capacity issues.

As shown in FIG. 5F, data-by-part family module 80 organizes the received data by part families rather than by transaction. This is a more-detailed breakdown of the data compared to the transactional organization of data-by-supplier module 78 (shown in above in FIG. 5E). Organizing the data by part families allows the user to investigate the deliveries based on groups of similar parts. This allows the user to identify if the supplier has capacity issues with certain groups of parts.

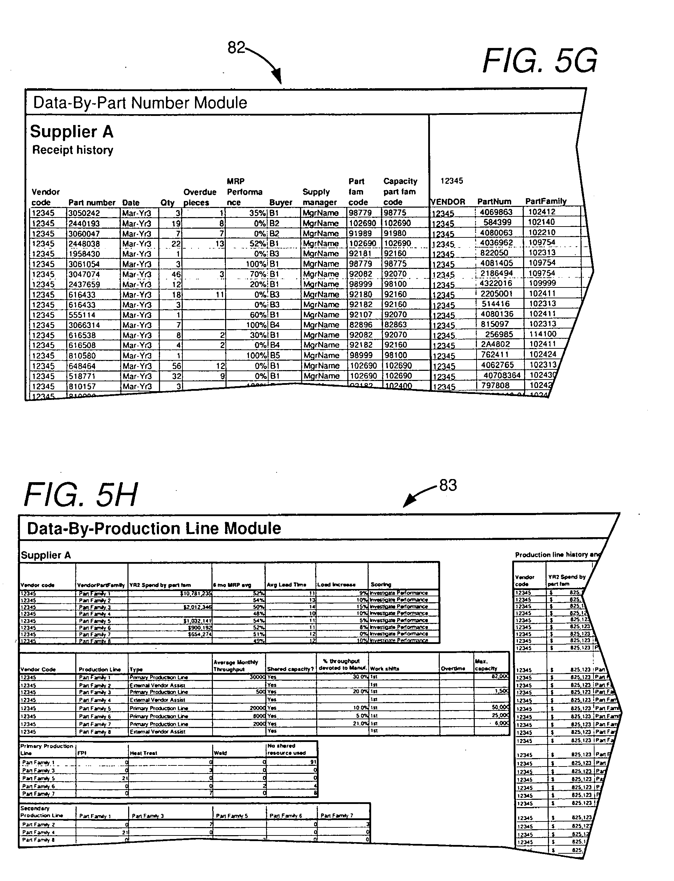

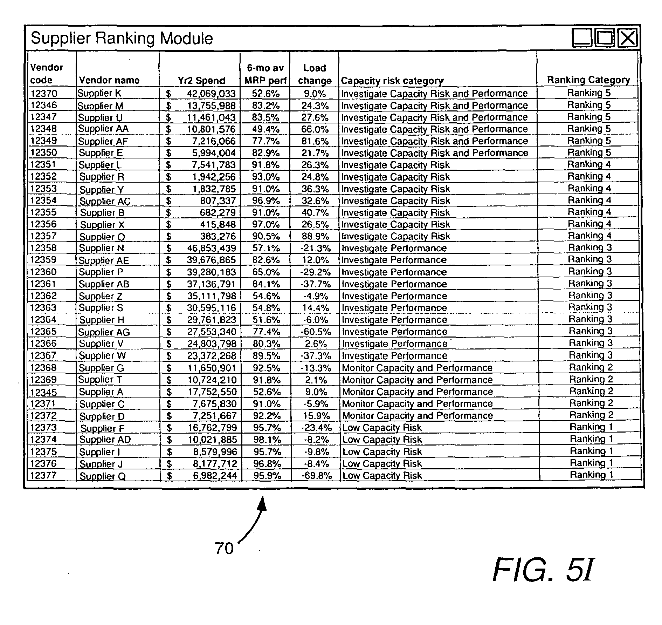

As shown in FIG. 5G, data-by-part number module 82 organizes the received data by each part, rather than by part families or transactions. This is a more-detailed breakdown of the data compared to the part families organization of data-by-part family module 80 (shown in above in FIG. 5F). Organizing the data by each part allows the user to investigate the deliveries based on the parts to determine whether certain parts within a part family are the potential causes of the supplier's capacity or performance issues.

As shown in FIG. 5H, data-by-production line module 83 organizes the received data by production lines, as defined by the supplier. Organizing the data by production lines allows the user to investigate the deliveries based on each production line of the supplier (e.g., based on primary production lines). This allows the user to determine whether limitations in the production lines (e.g., limited part throughputs devoted to the manufacturer) are the potential causes of the supplier's capacity or performance issues.

FIG. 5I is a screen shot of supplier ranking module 70, which is accessible when the user selects ranking button 86 in supplier selection module 68 (shown above in FIG. 5A). Supplier ranking module 70 provides a ranking of the suppliers based on the average capacity risk ratings that are generated pursuant to step 48 of method 32 (shown above in FIG. 3). As shown, supplier ranking module 70 includes the names of the suppliers, the average past MRP performances of each supplier, the probable load increases of the manufacturer, and the average capacity risk ratings for each supplier.

The data in supplier ranking module 70 allows the user to readily identify which suppliers have capacity risks that require further investigation. The user may then open the supplier record 72 for each of the suppliers that require further investigations, and analyze the details with summary module 74, part family module 76, production line module 77, data-by-supplier module 78, data-by-part family module 80, data-by-part number module 82, and/or data-by-production line module 83, as discussed above. Accordingly, the display modules of SCT program 62 provide a convenient and efficient means for monitoring and investigating supplier capacities, thereby reducing time and effort required by the manufacturer to ensure it receives delivered parts on time.

Although the present invention has been described with reference to preferred embodiments, workers skilled in the art will recognize that changes may be made in form and detail without departing from the scope of the invention as defined by the appended claims.

**Claims**

1. A method for monitoring capacities for a plurality of suppliers that deliver parts to a manufacturer, the method comprising:

   receiving performance data of at least one of the suppliers (14);
   receiving forecast data of the manufacturer (16); and
   generating a capacity risk rating (18) for at least one supplier based on the received performance data and the received forecast data.

2. The method of claim 1, further comprising generating a supplier record for the at least one supplier (12).

3. The method of claim 1 or 2, further comprising ranking the at least one supplier based on the generated capacity risk rating.

4. The method of any one of the preceding claims, wherein receiving the performance data (14) comprises receiving at least one capacity commitment to the manufacturer from the at least one of the suppliers.

5. The method of any one of the preceding claims, wherein generating the capacity risk rating (18) comprises calculating a past material-requirements-planning performance of the at least one supplier.

6. The method of any one of the preceding claims, wherein generating the capacity risk rating (18) comprises generating a probable load increase of the manufacturer.

7. The method of any one of the preceding claims, further comprising generating an average capacity risk rating for the at least one supplier (48) based at least in part on the generated capacity risk rating (18) for the at least one supplier.

8. The method of any one of the preceding claims, wherein the performance data includes at least one of past material-requirements-planning delivery performances, workstops, andons, overdue deliveries, temporary vendor assists, permanent vendor assists, and production line data.

9. The method of any one of the preceding claims, wherein the forecast data includes at least one of pending orders, forecasted orders, firm orders, and lead time information.

10. A computer program for monitoring capacities for a plurality of suppliers that deliver parts to a manufacturer, the program comprising:

    a routine that is configured to receive performance data of at least one of the suppliers (14) and forecast data of the manufacturer (16); and
    a display module configured to display information relating to the received performance data, the received forecast data, and a generated capacity risk rating for the at least one supplier (18), wherein the generated capacity risk rating (18) is based on the received performance data and the received forecast data.

11. The computer program of claim 10, wherein the display module includes at least one of a supplier ranking module (70), a summary module (74), a part family module (76), a production line module (77), a data-by-supplier module (78), a data-by-part family module (80), a data-by-part number module (82), and a data-by-production line module (83).

**12.** The computer program of claim 10 or 11, wherein the displayed information relating to the received performance data includes at least one of past material-requirements-planning delivery performances, workstops, andons, overdue deliveries, temporary vendor assists, permanent vendor assists, and production line data.

**13.** The computer program of any one of claims 10 to 12, wherein the displayed information relating to the received forecast data includes at least one of pending orders, forecasted orders, firm orders, and lead time information.

**14.** The computer program of any one of claims 10 to 13, wherein the generated capacity risk rating is a function of a past material-requirements-planning performance of the at least one supplier and a probable load increase of the manufacturer.

**15.** A computer system comprising:

a user interface (64) comprising a viewing screen;
a processor (66) configured to communicate with the user interface;
a database (58) configured to communicate with the processor (66) for storing performance data of a plurality of suppliers and forecast data of a manufacturer; and
a program configured to communicate with the processor (66) for monitoring capacities of at least one of the suppliers, the program comprising:

a routine that is configured to receive the performance data and the forecast data from the database; and
a display module configured to display information on the viewing screen, wherein the information relates to the received performance data, the received forecast data, and a generated capacity risk rating for the at least one supplier, the generated capacity risk rating being based on the received performance data and the received forecast data.

**16.** The computer system of claim 15, wherein the display module includes at least one of a supplier ranking module (70), a summary module (74), a part family module (76), a production line module (77), a data-by-supplier module (78), a data-by-part family module (80), a data-by-part number module (82), and a data-by-production line module (83).

**17.** The computer system of claim 15 or 16, further comprising a transactional workstation (56) configured to communicate with the database (58) for relaying the performance data and the forecast data to the database (58).

**18.** The computer system of any one of claims 15 to 17, wherein the displayed information relating to the received performance data includes at least one of past material-requirements-planning delivery performances, workstops, andons, overdue deliveries, temporary vendor assists, permanent vendor assists, and production line data.

**19.** The computer system of any one of claims 15 to 18, wherein the displayed information relating to the received forecast data includes at least one of pending orders, forecasted orders, firm orders, and lead time information.

**20.** The computer system of any one of claims 15 to 19, wherein the generated capacity risk rating is a function of a past material-requirements-planning performance of the at least one supplier and a probable load increase of the manufacturer.

10

Create a supplier record for a supplier ⎯12

↓

Receive performance data of the supplier ⎯14

↓

Receive forecast data of the manufacturer ⎯16

↓

Generate a capacity risk rating for the supplier ⎯18

*FIG. 1*

*FIG. 2*

20

MRP Performance

| 80% | 26 | 90% | 24 | 95% | 22 | 100% |

(Rating 1)
Low Capacity Risk ⎯ 0%

(Rating 3)
Investigate Performance

(Rating 2)
Monitor Performance and Capacity ⎯ 10%

⎯ 20%

(Rating 5)
Investigate Performance and Capacity

(Rating 4)
Investigate Capacity

Load Increase

30 ⎯ 28 ⎯ 40%

32

Create a supplier record for each supplier ⎯ 34

↓

Proceed to next supplier ⎯ 36

↓

Proceed to next part for current supplier ⎯ 38

↓

Receive performance data for current part of current supplier ⎯ 40

↓

Receive forecast data of the manufacturer for current part ⎯ 42

↓

Generate a capacity risk rating relating to current part for current supplier ⎯ 44

↓

Last part? ⎯ 46

No →

Yes ↓

Generate an average capacity risk rating for current supplier ⎯ 48

↓

Last supplier? ⎯ 50    No →

Yes ↓

Rank the suppliers based on the average capacity risk ratings ⎯ 52

FIG. 3

54

Transaction
Workstation

56

Access Database

58

60

User Interface

64

66

Processor

FIG. 4

62

Supplier Selection
Module

68

70

Supplier Ranking
Module

Summary Module — 74

72

Part Family Module — 76

Production Line
Module — 77

Data-By-Supplier
Module — 78

Data-By-Part Family
Module — 80

Data-By-Part Number
Module — 82

Data-By-Production
Line Module — 83

# FIG. 5A

| Supplier Selection Module | ☐ ☐ ☒ |
|---|---|

Please select supplier

| Supplier A - Vendor Code 12345 | ▽ |
|---|---|

| Supplier Ranking Module |
|---|

# FIG. 5E

## Data-By-Supplier Module

### Supplier A
Capacity dashboard

| Vendor code | 2005 spend | Spend category | 6-mo av MRP performance | Load change | TVA risk | Spares risk | Capacity risk category |
|---|---|---|---|---|---|---|---|
| 12345 | $17,752,550 | high | 52% | 9% | no | no | Investigate Performance |

### Supplier and commodity

| Vendor Code | Name | Commodity | Commodity or partner mgr | Partner | Yr1 spend | Yr2 YTD spend | Spendfcst(POs) |
|---|---|---|---|---|---|---|---|
| 12345 | Supplier A | Large Machined Parts | MgrName | no | $21,207,125 | $17,752,550 | $26,925,650 |

### LTA information

| Vendor code | LTA (Y/N) | LTA number | Number of parts | Codes | NTE millions | LTA keeper | Buyer code | Start date |
|---|---|---|---|---|---|---|---|---|
| 12345 | Yes | 100856 | 24 | BRM | 2 | KprName | A | Yr1 |

### Supplier history and forecast

| Vendor code | Date | MRP receipt qty | MRP receipt spend | MRP perf | TVA qty | TVA spend | Overdue Pieces | Overd |
|---|---|---|---|---|---|---|---|---|
| 12345 | Oct-YR1 | 410 | $ 1,540,629 | 70% | - | $ - | - | $ |
| 12345 | Nov-YR1 | 390 | $ 1,946,250 | 73% | - | $ - | - | $ |
| 12345 | Dec-YR1 | 450 | $ 1,399,126 | 71% | 2 | $ 352 | - | $ |
| 12345 | Jan-YR2 | 440 | $ 1,476,625 | 65% | - | $ - | - | $ |
| 12345 | Feb-YR2 | 480 | $ 1,385,773 | 58% | - | $ - | - | $ |
| 12345 | Mar-YR2 | 630 | $ 1,713,386 | 53% | - | $ - | - | $ |
| 12345 | Apr-YR2 | 410 | $ 1,398,148 | 49% | - | $ - | - | $ |
| 12345 | May-YR2 | 601 | $ 1,740,231 | 52% | - | $ - | - | $ |
| 12345 | Jun-YR2 | 660 | $ 2,066,722 | 53% | - | $ - | - | $ |
| 12345 | Jul-YR2 | 476 | $ 1,065,872 | 59% | - | $ - | - | $ |
| 12345 | Aug-YR2 | 483 | $ 1,486,591 | 59% | 1 | $ 325 | 523 | $ |
| 12345 | Sep-YR2 | 560 | $ 1,188,100 | 53% | 1 | $ 240 | 560 | |
| 12345 | Oct-YR2 | 602 | $ 1,650,732 | | | 1,752 | 444 | |
| | | 440 | $ 1,310,560 | | | | | |

Summary Module

**Supplier A**
Data current through end of March Yr3

**Investigate Performance**
**(Rating 3)**

96  98  100

Delivery History

Past MRP Performance

Prob. Load Incr.

**Supplier Data**

| Vendor code | | | 12345 |
|---|---|---|---|
| Commodity Manager | | | Manager Name |
| Commodity (greatest spend) | | | Commodity Name |
| MRP visibility beyond open PO | | | Yes |
| LTA with supplier | | | Yes |
| Fcst P/N avg lead time (wks) | | | 39 |

| | Yr1 | Yr2 | Placed POs |
|---|---|---|---|
| Supplier Spend | $ 21.6 | $ 17.4 | $ 27.9 |
| TVA Spend | | $ .004 | |
| P/N Count | 45 | 71 | 74 |

**Monthly Averages (# pieces)**

| | |
|---|---|
| MRP receipts - | 522 |
| MRP fcst - | 545 |
| spares fcst - | 30 |
| TVA projection - | 0 |
| Overdue - | 29 |

| | |
|---|---|
| Total possible demand - | 599 |
| Probable load increase - | 9% |
| Possible load increase - | 18% |

TVA/PVA risk - No    Spares risk - No

Average MRP performance

| 18-month | 12-month | 6-month |
|---|---|---|
| 59.2% | 56.1% | 52.6% |

102  104  106

88

**Receipts and Forecast**

# of Pieces

avg lead time
present time

TVA/PVA
Receipt history
Placed orders
Overdue
Military spars fcst
MRP forecast

90

**TVA & PVA**
monthly avg receipts (pieces)- past 12 mos      1
monthly avg receipts (spend)- past 12 mos   $382
pieces as % of MRP - past 12 mos   0%
spend as % of MRP - past 12 mos   0%

**Overdue**
Total current overdue pieces   379
Months of overdue   0.7
Value of overdue   $1,285,150
Overdue value as % of avg monthly receipts   85%

**Overdue age**

□1 month
□2 months
□3 months
□4 months
□5 months
□>5 months

92

108  110  112

**Required Starts to Meet MRP Delivery Schedule**

# of Pieces

present time

Placed orders for required starts
Required starts to meet MRP

94

74

*FIG. 5B*

FIG. 5C

FIG. 5D

## Production Line Module

Supplier A — Part Family 1 / Primary Production Line — YR2 Spend: $ 10,781,235

Supplier A — Part Family 2 / External Vendor Assist

FIG. 5F

## Data-By-Part Family Module

### Supplier A

Count of Part Families    14

Part family history and forecast

| Vendor code | Yr2 Spend by part fam | Capacity Part Family Code | Capacity Part Family Name | Date | MRP receipt qty | MRP receipt spend | MRP perf |
|---|---|---|---|---|---|---|---|
| 12345 | $ 9,987,110 | 110600 | Heat Exhangers | Oct-YR1 | 133 | $ 494,135 | 67% |
| 12345 | $ 9,987,110 | 110600 | Heat Exhangers | Nov-YR1 | 158 | $ 774,262 | 71% |
| 12345 | $ 9,987,110 | 110600 | Heat Exhangers | Dec-YR1 | 100 | $ 485,020 | 67% |
| 12345 | $ 9,987,110 | 110600 | Heat Exhangers | Jan-YR2 | 95 | $ 461,353 | 64% |
| 12345 | $ 9,987,110 | 110600 | Heat Exhangers | Feb-YR2 | 113 | $ 555,424 | 59% |
| 12345 | $ 9,987,110 | 110600 | Heat Exhangers | Mar-YR2 | 149 | $ 609,349 | 48% |
| 12345 | $ 9,987,110 | 110600 | Heat Exhangers | Apr-YR2 | 141 | $ 636,154 | 43% |
| 12345 | $ 9,987,110 | 110600 | Heat Exhangers | May-YR2 | 105 | $ 311,141 | 44% |
| 12345 | $ 9,987,110 | 110600 | Heat Exhangers | Jun-YR2 | 187 | $ 746,784 | 42% |
| 12345 | $ 9,987,110 | 110600 | Heat Exhangers | Jul-YR2 | 99 | $ 381,673 | 40% |
| 12345 | $ 9,987,110 | 110600 | Heat Exhangers | Aug-YR3 | 175 | $ 706,074 | 44% |
| 12345 | $ 9,987,110 | 110600 | Heat Exhangers | Sep-YR3 | 150 | $ 574,649 | 40% |
| 12345 | $ 9,987,110 | 110600 | Heat Exhangers | Oct-YR3 | 167 | $ 692,442 | 31% |
| 12345 | $ 9,987,110 | 110600 | Heat Exhangers | Nov-YR3 | 131 | $ 577,164 | 35% |
| 12345 | $ 9,987,110 | 110600 | Heat Exhangers | Dec-YR3 | 171 | $ 621,968 | 43% |
| 12345 | | | | | | | |

82

# FIG. 5G

## Data-By-Part Number Module

### Supplier A
Receipt history

| Vendor code | Part number | Date | Qty | Overdue pieces | MRP Performance | Buyer | Supply manager | Part fam code | Capacity part fam code | 12345 VENDOR | PartNum | PartFamily |
|---|---|---|---|---|---|---|---|---|---|---|---|---|
| 12345 | 3050242 | Mar-Yr3 | 3 | 1 | 35% | B1 | MgrName | 98779 | 98775 | 12345 | 4069863 | 102412 |
| 12345 | 2440193 | Mar-Yr3 | 19 | 8 | 0% | B2 | MgrName | 102690 | 102690 | 12345 | 584399 | 102140 |
| 12345 | 3060047 | Mar-Yr3 | 7 | 7 | 0% | B2 | MgrName | 91989 | 91980 | 12345 | 4080063 | 102210 |
| 12345 | 2448038 | Mar-Yr3 | 22 | 13 | 52% | B1 | MgrName | 102690 | 102690 | 12345 | 4036962 | 109754 |
| 12345 | 1958430 | Mar-Yr3 | 1 | | 0% | B3 | MgrName | 92181 | 92160 | 12345 | 822050 | 102313 |
| 12345 | 3061054 | Mar-Yr3 | 3 | | 100% | B1 | MgrName | 98779 | 98775 | 12345 | 4081405 | 109754 |
| 12345 | 3047074 | Mar-Yr3 | 46 | 3 | 70% | B1 | MgrName | 92082 | 92070 | 12345 | 2186494 | 109754 |
| 12345 | 2437659 | Mar-Yr3 | 12 | | 20% | B1 | MgrName | 98999 | 98100 | 12345 | 4322016 | 109999 |
| 12345 | 616433 | Mar-Yr3 | 18 | 11 | 0% | B3 | MgrName | 92180 | 92160 | 12345 | 2205001 | 102411 |
| 12345 | 616433 | Mar-Yr3 | 3 | | 0% | B3 | MgrName | 92182 | 92160 | 12345 | 514416 | 102313 |
| 12345 | 555114 | Mar-Yr3 | 1 | | 60% | B1 | MgrName | 92107 | 92070 | 12345 | 4080136 | 102411 |
| 12345 | 3066314 | Mar-Yr3 | 7 | | 100% | B4 | MgrName | 82896 | 82863 | 12345 | 815097 | 102313 |
| 12345 | 616538 | Mar-Yr3 | 8 | 2 | 30% | B1 | MgrName | 92082 | 92070 | 12345 | 256985 | 114100 |
| 12345 | 616508 | Mar-Yr3 | 4 | 2 | 0% | B4 | MgrName | 92182 | 92160 | 12345 | 2A4802 | 102411 |
| 12345 | 810580 | Mar-Yr3 | 1 | | 100% | B5 | MgrName | 98999 | 98100 | 12345 | 762411 | 102424 |
| 12345 | 648464 | Mar-Yr3 | 56 | 12 | 0% | B1 | MgrName | 102690 | 102690 | 12345 | 4062765 | 102313 |
| 12345 | 518771 | Mar-Yr3 | 32 | 9 | 0% | B1 | MgrName | 102690 | 102690 | 12345 | 40708364 | 102430 |
| 12345 | 810157 | Mar-Yr3 | 3 | | | | | 92182 | 102400 | 12345 | 797808 | 10242 |
| 12345 | 810000 | | | | | | | | | | | 1024 |

# FIG. 5H

83

## Data-By-Production Line Module

### Supplier A

Production line history and

| Vendor code | VendorPartFamily | YR2 Spend by part fam | 6 mo MRP avg | Avg Lead Time | Load Increase | Scoring |
|---|---|---|---|---|---|---|
| 12345 | Part Family 1 | $10,781,235 | 52% | 11 | 9% | Investigate Performance |
| 12345 | Part Family 2 | | 54% | 13 | 10% | Investigate Performance |
| 12345 | Part Family 3 | $2,012,346 | 50% | 14 | 15% | Investigate Performance |
| 12345 | Part Family 4 | | 48% | 10 | 10% | Investigate Performance |
| 12345 | Part Family 5 | $1,032,141 | 54% | 11 | 5% | Investigate Performance |
| 12345 | Part Family 6 | $900,192 | 52% | 11 | 8% | Investigate Performance |
| 12345 | Part Family 7 | $554,274 | 51% | 12 | 0% | Investigate Performance |
| 12345 | Part Family 8 | | 49% | 12 | 10% | Investigate Performance |

| Vendor Code | Production Line | Type | Average Monthly Throughput | Shared capacity? | % throughput devoted to Manuf. | Work shifts | Overtime | Max. capacity |
|---|---|---|---|---|---|---|---|---|
| 12345 | Part Family 1 | Primary Production Line | 30000 | Yes | 30.0% | 1st | | 82,000 |
| 12345 | Part Family 2 | External Vendor Assist | | Yes | | 1st | | |
| 12345 | Part Family 3 | Primary Production Line | 500 | Yes | 20.0% | 1st | | 1,500 |
| 12345 | Part Family 4 | External Vendor Assist | | Yes | | 1st | | |
| 12345 | Part Family 5 | Primary Production Line | 20000 | Yes | 10.0% | 1st | | 50,000 |
| 12345 | Part Family 6 | Primary Production Line | 6000 | Yes | 5.0% | 1st | | 25,000 |
| 12345 | Part Family 7 | Primary Production Line | 2000 | Yes | 21.0% | 1st | | 6,000 |
| 12345 | Part Family 8 | External Vendor Assist | | Yes | | 1st | | |

| Primary Production Line | FPI | Heat Treat | Weld | No shared resource used |
|---|---|---|---|---|
| Part Family 1 | 0 | 0 | 0 | 91 |
| Part Family 3 | 0 | 3 | 0 | 0 |
| Part Family 5 | 21 | 0 | 0 | 0 |
| Part Family 6 | 0 | 0 | 2 | 4 |
| Part Family 7 | 0 | 7 | 0 | 8 |

| Secondary Production Line | Part Family 1 | Part Family 3 | Part Family 5 | Part Family 6 | Part Family 7 |
|---|---|---|---|---|---|
| Part Family 2 | | 7 | | | 3 |
| Part Family 4 | 21 | 0 | | 0 | 0 |
| Part Family 8 | 0 | | 3 | 0 | 0 |

| Vendor code | YR2 Spend by part fam |
|---|---|
| 12345 | $ 825, |
| 12345 | $ 825, |
| 12345 | $ 825,15 |
| 12345 | $ 825,12 |
| 12345 | $ 825,12 |
| 12345 | $ 825,123 |
| 12345 | $ 825,123 |
| 12345 | $ 825,123 |
| 12345 | $ 825,123 |
| 12345 | $ 825,123 Part |
| 12345 | $ 825,123 Part |
| 12345 | $ 825,123 Part Fa |
| 12345 | $ 825,123 Part Fa |
| 12345 | $ 825,123 Part Fami |
| 12345 | $ 825,123 Part Fami |
| 12345 | $ 825,123 Part Fam |
| 12345 | $ 825,123 Part Fa |
| 12345 | $ 825,123 Part Fa |
| 12345 | $ 825,123 Part F |
| 12345 | $ 825,123 Part |
| 12345 | $ 825,123 Par |
| 12345 | $ 825,123 Pa |
| 12345 | $ 825,123 P |
| 12345 | $ 825,123 P |
| 12345 | $ 825,123 |
| 12345 | $ 825,123 |
| 12345 | $ 825,12 |
| 12345 | $ 825,1 |
| 12345 | $ 825, |

## Supplier Ranking Module    ☐ ☐ ☒

| Vendor code | Vendor name | Yr2 Spend | 6-mo av MRP perf | Load change | Capacity risk category | Ranking Category |
|---|---|---|---|---|---|---|
| 12370 | Supplier K | $ 42,069,033 | 52.6% | 9.0% | Investigate Capacity Risk and Performance | Ranking 5 |
| 12346 | Supplier M | $ 13,755,988 | 83.2% | 24.3% | Investigate Capacity Risk and Performance | Ranking 5 |
| 12347 | Supplier U | $ 11,461,043 | 83.5% | 27.6% | Investigate Capacity Risk and Performance | Ranking 5 |
| 12348 | Supplier AA | $ 10,801,576 | 49.4% | 66.0% | Investigate Capacity Risk and Performance | Ranking 5 |
| 12349 | Supplier AF | $ 7,216,066 | 77.7% | 81.6% | Investigate Capacity Risk and Performance | Ranking 5 |
| 12350 | Supplier E | $ 5,994,004 | 82.9% | 21.7% | Investigate Capacity Risk and Performance | Ranking 5 |
| 12351 | Supplier L | $ 7,541,783 | 91.8% | 26.3% | Investigate Capacity Risk | Ranking 4 |
| 12352 | Supplier R | $ 1,942,256 | 93.0% | 24.8% | Investigate Capacity Risk | Ranking 4 |
| 12353 | Supplier Y | $ 1,832,785 | 91.0% | 36.3% | Investigate Capacity Risk | Ranking 4 |
| 12354 | Supplier AC | $ 807,337 | 96.9% | 32.6% | Investigate Capacity Risk | Ranking 4 |
| 12355 | Supplier B | $ 682,279 | 91.0% | 40.7% | Investigate Capacity Risk | Ranking 4 |
| 12356 | Supplier X | $ 415,848 | 97.0% | 26.5% | Investigate Capacity Risk | Ranking 4 |
| 12357 | Supplier O | $ 383,276 | 90.5% | 88.9% | Investigate Capacity Risk | Ranking 4 |
| 12358 | Supplier N | $ 46,853,439 | 57.1% | -21.3% | Investigate Performance | Ranking 3 |
| 12359 | Supplier AE | $ 39,676,865 | 82.6% | 12.0% | Investigate Performance | Ranking 3 |
| 12360 | Supplier P | $ 39,280,183 | 65.0% | -29.2% | Investigate Performance | Ranking 3 |
| 12361 | Supplier AB | $ 37,136,791 | 84.1% | -37.7% | Investigate Performance | Ranking 3 |
| 12362 | Supplier Z | $ 35,111,798 | 54.6% | -4.9% | Investigate Performance | Ranking 3 |
| 12363 | Supplier S | $ 30,595,116 | 54.8% | 14.4% | Investigate Performance | Ranking 3 |
| 12364 | Supplier H | $ 29,761,823 | 51.6% | -6.0% | Investigate Performance | Ranking 3 |
| 12365 | Supplier AG | $ 27,553,340 | 77.4% | -60.5% | Investigate Performance | Ranking 3 |
| 12366 | Supplier V | $ 24,803,798 | 80.3% | 2.6% | Investigate Performance | Ranking 3 |
| 12367 | Supplier W | $ 23,372,268 | 89.5% | -37.3% | Investigate Performance | Ranking 3 |
| 12368 | Supplier G | $ 11,650,901 | 92.5% | -13.3% | Monitor Capacity and Performance | Ranking 2 |
| 12369 | Supplier T | $ 10,724,210 | 91.8% | 2.1% | Monitor Capacity and Performance | Ranking 2 |
| 12345 | Supplier A | $ 17,752,550 | 52.6% | 9.0% | Monitor Capacity and Performance | Ranking 2 |
| 12371 | Supplier C | $ 7,675,830 | 91.0% | -5.9% | Monitor Capacity and Performance | Ranking 2 |
| 12372 | Supplier D | $ 7,251,667 | 92.2% | 15.9% | Monitor Capacity and Performance | Ranking 2 |
| 12373 | Supplier F | $ 16,762,799 | 95.7% | -23.4% | Low Capacity Risk | Ranking 1 |
| 12374 | Supplier AD | $ 10,021,885 | 98.1% | -8.2% | Low Capacity Risk | Ranking 1 |
| 12375 | Supplier I | $ 8,579,996 | 95.7% | -9.8% | Low Capacity Risk | Ranking 1 |
| 12376 | Supplier J | $ 8,177,712 | 96.8% | -8.4% | Low Capacity Risk | Ranking 1 |
| 12377 | Supplier Q | $ 6,982,244 | 95.9% | -69.8% | Low Capacity Risk | Ranking 1 |

70

## FIG. 5I